# EUROPEAN PATENT APPLICATION

(11) **EP 2 869 507 A1**
(43) Date of publication of application: **06.05.2015**
(21) Application number: 12879898.0
(22) Date of filing: 27.06.2012
(51) Int. Cl.: H04L 12/721, H04L 29/06

(54) **SESSION ROUTING METHOD, APPARATUS AND SYSTEM**

(71) Applicant: Huawei Technologies Co., Ltd., Longgang District Shenzhen, Guangdong 518129 (CN)
(72) Inventor: HE, Ning, Shenzhen Guangdong 518129 (CN)
(74) Representative: Isarpatent
(86) International application number: PCT/CN2012/077606
(87) International publication number: WO 2014/000175

(57) **Abstract**

A method, a device and a system for session routing are provided. The method includes: when a first terminal enters a first network in which a first routing device is located, the first routing device obtains an address of a second routing device in a second network; the first routing device establishes a tunnel with the second routing device according to the address of the second routing device; and the first routing device maintains a session between the first terminal and the second routing device through the tunnel, so that the second routing device routes the session to a second terminal in the second network. In the present invention, there is no need to set a home network for the terminal, when the terminal enters a network, session routing between the terminal and a routing device in other networks is achieved by a routing device to which the terminal is attached in the network, and since the routing device to which the terminal belongs varies with the network in which the terminal is located, the communication traffic of the terminal may not be concentrated on one routing device for forwarding, thus reducing the processing load of a single routing device.

## Description

### TECHNICAL FIELD

The present invention relates to a field of communications technologies, and in particular, to a method, a device and a system for session routing.

### BACKGROUND

An MIP (Mobile Internet Protocol, mobile internet protocol) technology is that an MN (Mobile Node, mobile node) achieves a roaming function spanning different network segments by means of a fixed network IP (Internet Protocol, internet protocol) address, in order to ensure that a network privilege based on the network IP does not generate any variation in a roaming process. The MIP is applied to all networks based on an IP (Internet Protocol, internet protocol). However, since not all the MN supports the MIP technology, in order to provide mobile IP data services to the MN not supporting the MIP technology in a network, a PMIP (Proxy MIP, proxy mobile internet protocol) technology is adopted in the prior art, and instead of the MN, a defined network entity finishes registration, update and maintenance operations of a mobile IP, thus the MN does not need to process mobile IP signaling.

In a PMIP network, each MN belongs to a fixed routing device, namely an LMA (Local Mobility Anchor, local mobility anchor), a network in which the fixed LMA is located is a home network of the MN. When the MN enters a visited network from the home network, the MN establishes a transmission link with an MAG (Mobile Access Gateway, mobile access gateway) in the visited network, and the MAG, serving as the defined network entity, establishes a transmission tunnel with the LMA in the home network to which the MN belongs, in order to achieve communication between the MN and a CN (Correspondent Node, correspondent node) which establishes a session in the home network.

Since each MN belongs to the fixed LMA in the home network, after the MN enters the visited network, all communication traffic needs to be forwarded by the LMA, and when a large number of MN belong to one fixed LMA, a processing load of the LMA in the home network may be quite large.

### SUMMARY

Embodiments of the present invention provide a method, a device and a system for session routing, for solving a problem of larger processing load of an LMA in an existing PMIP network.

To solve the above-mentioned technical problem, the embodiments of the present invention disclose the following technical solutions.

On one hand, a method for session routing is provided, including:
obtaining, by a first routing device, when a first terminal enters a first network in which the first routing device is located, an address of a second routing device in a second network;
establishing, by the first routing device, a tunnel with the second routing device according to the address of the second routing device; and
maintaining, by the first routing device, a session between the first terminal and the second routing device through the tunnel, so that the second routing device routes the session to a second terminal in the second network.

On another hand, a device for session routing is provided, the device for session routing serves as a first routing device and includes:
an obtaining unit, configured to obtain, when a first terminal enters a first network in which the first routing device is located, an address of a second routing device in a second network;
an establishing unit, configured to establish a tunnel with the second routing device according to the address of the second routing device obtained by the obtaining unit; and
a routing unit, configured to maintain a session between the first terminal and the second routing device through the tunnel established by the establishing unit, so that the second routing device routes the session to a second terminal in the second network.

On another hand, a system for session routing is provided, including: a first routing device and a second routing device, wherein the first routing device is configured to, when a first terminal enters a first network in which the first routing device is located, obtain an address of the second routing device in a second network, establish a tunnel with the second routing device according to the address of the second routing device, and maintain a session between the first terminal and the second routing device through the tunnel; and
the second routing device is configured to route the session to a second terminal in the second network.

In the embodiments of the present invention, when the first terminal enters the first network in which the first routing device is located, the first routing device obtains the address of the second routing device in the second network, the first routing device establishes the tunnel with the second routing device according to the address of the second routing device, and maintains the session between the first terminal and the second routing device through the tunnel, so that the second routing device routes the session to the second terminal in the second network. In the embodiments of the present invention, there is no need to set a home network for the terminal, the terminal may no longer belong to a fixed routing device in the home network, when the terminal enters a network, session routing between the terminal and a routing device in other networks is achieved by a routing device to which the terminal is attached in the network, and since the routing device to which the terminal belongs varies with the network in which the terminal is located, the communication traffic of the terminal may not be concentrated on one routing device for forwarding, thus reducing the processing load of a single routing device.

### BRIEF DESCRIPTION OF DRAWINGS

To illustrate technical solutions in the embodiments of the present invention or in the prior art more clearly, a brief introduction on the accompanying drawings which are needed in the description of the embodiments or the prior art may be given below. Apparently, the accompanying drawings in the description below are merely some of the embodiments of the present invention, based on which other drawings may be obtained by those of ordinary skill in the art without any inventive efforts.
Fig.1 is a flowchart of an embodiment of a method for session routing in the present invention;
Fig.2 is a flowchart of another embodiment of a method for session routing in the present invention;
Fig.3 is a flowchart of another embodiment of a method for session routing in the present invention;
Fig.4 is a flowchart of another embodiment of a method for session routing in the present invention;
Fig.5 is a flowchart of another embodiment of a method for session routing in the present invention;
Fig.6 is a flowchart of another embodiment of a method for session routing in the present invention;
Fig.7 is a block diagram of an embodiment of a device for session routing in the present invention;
Fig.8 is a block diagram of another embodiment of a device for session routing in the present invention;
Fig.9 is a block diagram of an embodiment of a system for session routing in the present invention.

### DESCRIPTION OF EMBODIMENTS

To make objectives, technical solutions and advantages of the present invention clearer, a further detailed description of the present invention may be given below in combination with the accompanying drawings. Apparently, the embodiments described are merely a part, but not all, of the embodiments of the present invention. All of other embodiments, obtained by those of ordinary skill in the art based on the embodiments of the present invention without any creative efforts, fall into the protection scope of the present invention.

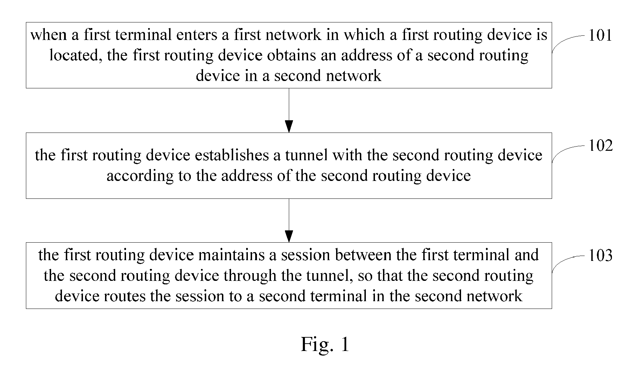

Fig.1 is a flowchart of an embodiment of a method for session routing in the present invention.

Step 101: when a first terminal enters a first network in which a first routing device is located, the first routing device obtains an address of a second routing device in a second network.

In the embodiment of the present invention, the first routing device may obtain the address of the second routing device in the second network in any one of the following modes:
a first mode, receiving a router solicitation message sent by the first terminal, wherein the router solicitation message contains the address of the second routing device and IP address information allocated by the second routing device to the first terminal;
a second mode, the first routing device obtains a configuration file stored in the first terminal, wherein the configuration file contains the address of the second routing device and IP address information allocated by the second routing device to the first terminal; and
a third mode, the first routing device receives a routing interactive message sent by the second routing device, wherein the routing interactive message contains the address of the second routing device and an IP address information domain of the second routing device.

Step 102: the first routing device establishes a tunnel with the second routing device according to the address of the second routing device.

When establishing the tunnel with the second routing device, the first routing device may adopt the following modes according to the different modes of obtaining the address of the second routing device in step 101.

A first mode, when the address of the second routing device in the second network is obtained in the first mode in step 101, the first routing device obtains the address of the second routing device from the router solicitation message; sends a proxy binding update message to the second routing device according to the address of the second routing device, wherein the proxy binding update message contains an address of the first routing device; after receiving a proxy binding acknowledgement message replied by the second routing device according to the address of the first routing device, stores the address of the second routing device and the IP address information allocated by the second routing device to the first terminal, and finishes the establishing the tunnel with the second routing device.

A second mode, when the address of the second routing device in the second network is obtained in the second mode in step 101, the first routing device obtains the address of the second routing device from the configuration file; sends a proxy binding update message to the second routing device according to the address of the second routing device, wherein the proxy binding update message contains an address of the first routing device; after receiving a proxy binding acknowledgement message replied by the second routing device according to the address of the first routing device, stores the address of the second routing device and the IP address information allocated by the second routing device to the first terminal, and finishes the establishing the tunnel with the second routing device.

A third mode, when the address of the second routing device in the second network is obtained in the third mode in step 101, the first routing device receives a router solicitation message sent by the first terminal, wherein the router solicitation message contains IP address information allocated by the second routing device to the first terminal; when searching out that the IP address information belongs to the IP address information domain of the second routing device, the first routing device obtains the address of the second routing device corresponding to the IP address information domain of the second routing device; sends a proxy binding update message to the second routing device according to the address of the second routing device, wherein the proxy binding update message contains an address of the first routing device; after receiving a proxy binding acknowledgement message replied by the second routing device according to the address of the first routing device, stores the address of the second routing device and the IP address information allocated by the second routing device to the first terminal, and finishes the establishing the tunnel with the second routing device.

A fourth mode, when the address of the second routing device in the second network is obtained in the third mode in step 101, the first routing device receives a data packet transmitted by the first terminal; when searching out that source IP address information of the data packet belongs to the IP address information domain of the second routing device, the first routing device obtains the address of the second routing device corresponding to the IP address information domain of the second routing device; sends a proxy binding update message to the second routing device according to the address of the second routing device obtained by a third address obtaining subunit, wherein the proxy binding update message contains an address of the first routing device; after receiving a proxy binding acknowledgement message replied by the second routing device according to the address of the first routing device, stores the address of the second routing device and IP address information allocated by the second routing device to the first terminal, and finishes the establishing the tunnel with the second routing device.

Step 103: the first routing device maintains a session between the first terminal and the second routing device through the tunnel, so that the second routing device routes the session to a second terminal in the second network.

When the tunnel is established in the first mode, the second mode and the third mode in step 102, when obtaining the address of the second routing device in the second network, the first routing device receives a data packet transmitted by the first terminal; and when detecting that address information of a source IP address of the data packet is allocated by the second routing device according to the address of the second routing device and the IP address information allocated by the second routing device to the first terminal, routes the data packet to the second routing device through the tunnel according to the address of the second routing device.

When the tunnel is established in the fourth mode in step 102, the data packet is routed to the second routing device through the tunnel according to the address of the second routing device.

It may be seen from the above-mentioned embodiment that, in the embodiment, there is no need to set a home network for the terminal, the terminal may no longer belong to a fixed routing device in the home network, when the terminal enters a network, session routing between the terminal and a routing device in other networks is achieved by the routing device to which the terminal is attached in the network, and since the routing device to which the terminal belongs varies with the network in which the terminal is located, the communication traffic of the terminal may not be concentrated on one routing device for forwarding, thus reducing the processing load of a single routing device.

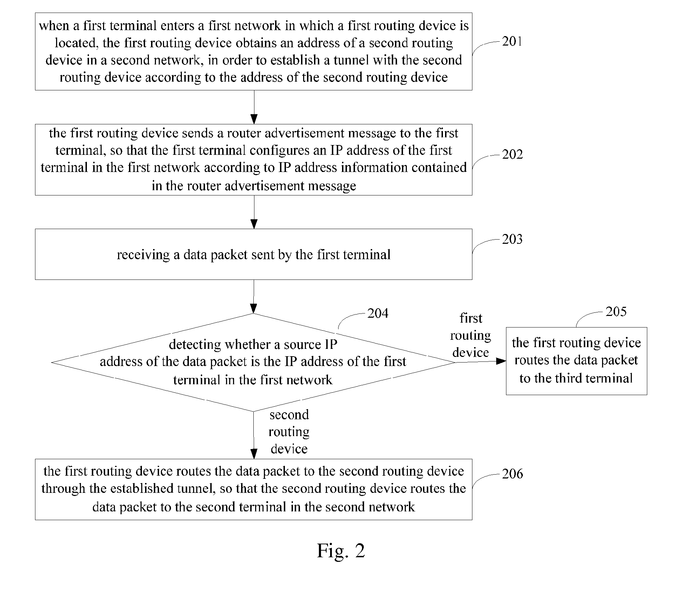

Fig.2 is a flowchart of another embodiment of a method for session routing of the present invention.

Step 201: when a first terminal enters a first network in which a first routing device is located, the first routing device obtains an address of a second routing device in a second network, in order to establish a tunnel with the second routing device according to the address of the second routing device.

In the embodiment of the present invention, the first routing device may obtain the address of the second routing device in the second network and establish the tunnel with the second routing device in any one of the following modes.

A first mode, the first routing device receives a router solicitation message sent by the first terminal, wherein the router solicitation message contains the address of the second routing device and IP address information allocated by the second routing device to the first terminal, obtains the address of the second routing device from the router solicitation message, sends a proxy binding update message to the second routing device according to the address of the second routing device, wherein the proxy binding update message contains an address of the first routing device; after receiving a proxy binding acknowledgement message replied by the second routing device according to the address of the first routing device, stores the address of the second routing device and the IP address information allocated by the second routing device to the first terminal, and finishes the establishing the tunnel with the second routing device.

A second mode, the first routing device obtains a configuration file stored in the first terminal, wherein the configuration file contains the address of the second routing device and IP address information allocated by the second routing device to the first terminal; the first routing device obtains the address of the second routing device from the configuration file; sends a proxy binding update message to the second routing device according to the address of the second routing device, wherein the proxy binding update message contains an address of the first routing device; after receiving a proxy binding acknowledgement message replied by the second routing device according to the address of the first routing device, stores the address of the second routing device and the IP address information allocated by the second routing device to the first terminal, and finishes the establishing the tunnel with the second routing device.

A third mode, the first routing device receives a routing interactive message sent by the second routing device, wherein the routing interactive message contains the address of the second routing device and an IP address information domain of the second routing device, the first routing device receives a router solicitation message sent by the first terminal, wherein the router solicitation message contains IP address information allocated by the second routing device to the first terminal; when searching out that the IP address information belongs to the IP address information domain of the second routing device, the first routing device obtains the address of the second routing device corresponding to the IP address information domain of the second routing device; sends a proxy binding update message to the second routing device according to the address of the second routing device, wherein the proxy binding update message contains an address of the first routing device; after receiving a proxy binding acknowledgement message replied by the second routing device according to the address of the first routing device, stores the address of the second routing device and the IP address information allocated by the second routing device to the first terminal, and finishes the establishing the tunnel with the second routing device.

A fourth mode, the first routing device receives a routing interactive message sent by the second routing device, wherein the routing interactive message contains the address of the second routing device and an IP address information domain of the second routing device, the first routing device receives a data packet transmitted by the first terminal; when searching out that source IP address information of the data packet belongs to the IP address information domain of the second routing device, the first routing device obtains the address of the second routing device corresponding to the IP address information domain of the second routing device; sends a proxy binding update message to the second routing device according to the address of the second routing device obtained by a third address obtaining subunit, wherein the proxy binding update message contains an address of the first routing device; after receiving a proxy binding acknowledgement message replied by the second routing device according to the address of the first routing device, stores the address of the second routing device and IP address information allocated by the second routing device to the first terminal, and finishes the establishing the tunnel with the second routing device.

Step 202: the first routing device sends a router advertisement message to the first terminal, so that the first terminal configures an IP address of the first terminal in the first network according to IP address information contained in the router advertisement message.

The router advertisement message contains an address of the first routing device and the IP address information allocated by the first routing device to the first terminal, the first terminal may store a corresponding relationship between the address of the first routing device and the IP address information allocated by the first routing device to the first terminal, and configure the IP address of the first terminal in the first network according to the IP address information.

Step 203: receiving a data packet sent by the first terminal.

When sending the data packet to maintain a session, the first terminal sends the data packet to the first routing device, since the first terminal is currently attached to the first routing device, the first routing device serves as a default routing device of the first terminal, and all data packets sent by the first terminal may be routed by the first routing device. Since the first terminal also needs to maintain the session with the second terminal in the second network, the data packet may be a data packet sent to a third terminal in the first network, or a data packet sent to the second terminal in the second network.

Step 204: detecting whether a source IP address of the data packet is the IP address of the first terminal in the first network, if the source IP address of the data packet is the IP address in the first network, executing step 205; if the source IP address of the data packet is an IP address in the second network, executing step 206.

When the source IP address of the data packet is the IP address of the first terminal in the first network, it indicates that the IP address is an IP address configured by the first terminal according to the IP address information allocated by the first routing device, and when the source IP address of the data packet is the IP address of the first terminal in the second network, it indicates that the IP address is an IP address configured by the first terminal according to the IP address information allocated by the second routing device.

Step 205: the first routing device routes the data packet to the third terminal and terminates the current flow.

When address information of the source IP address of the data packet is allocated by the first routing device, the first routing device serves as the default routing device of the first terminal, and routes the data packet to the third terminal corresponding to a target IP address according to the target IP address of the data packet; wherein the third terminal may a terminal in the first network and may also be a terminal in other networks excluding the first network.

Step 206: the first routing device routes the data packet to the second routing device through the established tunnel, so that the second routing device routes the data packet to the second terminal in the second network, and terminates the current flow.

When address information of the source IP address of the data packet is allocated by the second routing device, it indicates that the first terminal needs to maintain a session with a terminal in the second network, at this time, the first routing device may add an outer layer IP address to the data packet, set an outer layer source IP address of the data packet to be the IP address of the first routing device, set an outer layer target IP address to be the IP address of the second routing device, and then route the data packet to the second routing device through the tunnel, the second routing device decapsulates the data packet, removes the outer layer IP address of the data packet and routes the data packet to the second terminal corresponding to an inner layer target IP address according to the inner layer target IP address.

It may be seen from the above-mentioned embodiment that, in the embodiment, there is no need to set a home network for the terminal, the terminal may no longer belong to a fixed routing device in the home network, when the terminal enters a network, session routing between the terminal and a routing device in other networks is achieved by the routing device to which the terminal is attached in the network, and since the routing device to which the terminal belongs varies with the network in which the terminal is located, the communication traffic of the terminal may not be concentrated on one routing device for forwarding, thus reducing the processing load of a single routing device.

A detailed description of the embodiments of the present invention may be given below in combination with specific application scenarios. In the embodiments of the present invention, different routing devices AR are configured in different networks, when entering a different network, an MN establishes a connection with the AR in the network and communicates with a CN in the different network through the AR.

For convenience of illustration, it is assumed in all the following embodiments that the MN is moved to a new network, the AR in the network is defined as an nAR, the new network is defined as a first network, the CN in the first network is defined as a CN1, wherein before moving to the first network, the MN has established a connection with a pAR in a second network, and after entering the first network, the MN still needs to maintain a session with a CN2 in the second network through the pAR.

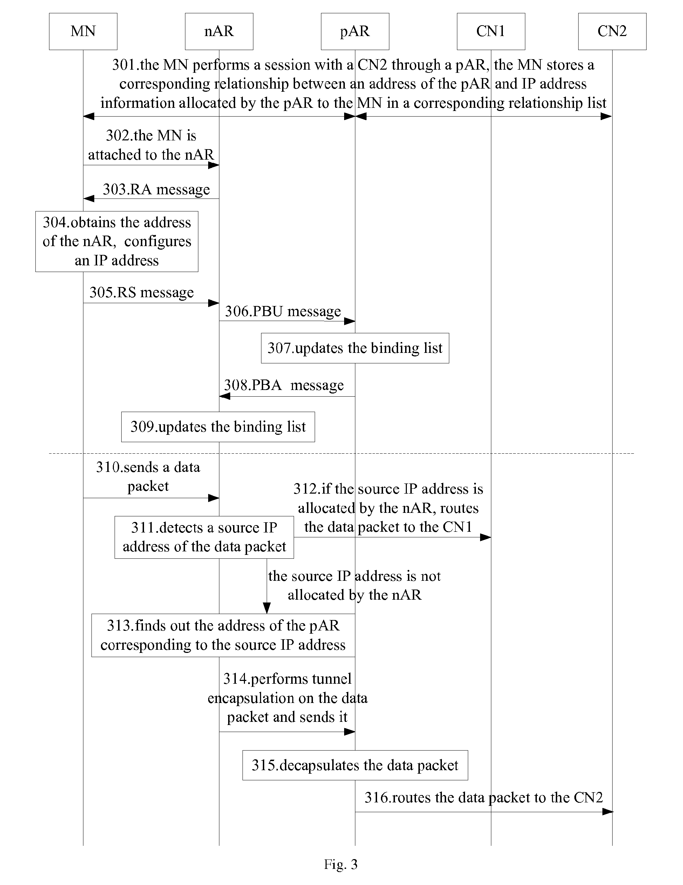

Fig.3 is a flowchart of another embodiment of a method for session routing in the present invention.

Step 301: when an MN is in a second network, the MN performs a session with a CN2 through a pAR, the MN stores a corresponding relationship between an address of the pAR and IP address information allocated by the pAR to the MN, and the pAR establishes a binding list for the MN.

The following table 1 is a corresponding relationship list maintained in the MN, wherein it is assumed that the address of the pAR is expressed as pAR-address, and the IP address information allocated by the pAR to the MN is expressed as IPp:

**Table 1**

| | |
|---|---|
| pAR-address | IPp |

The following table 2 is the binding list established by the pAR for the MN, wherein an identifier of the MN is expressed as MN id, and the IP address information allocated by the pAR to the MN is expressed as IPp:

**Table 2**

| | |
|---|---|
| MN id | IPp |

Step 302: after entering a first network in which an nAR is located, the MN is attached to the nAR, and the nAR establishes a binding list for the MN.

Step 303: the nAR sends an RA (Router Advertisement, router advertisement) message to the MN, wherein the RA message at least contains IP address information allocated by the nAR to the MN and an address of the nAR.

The global address of the nAR is carried by a prefix information option (prefix information option) in the RA message. The nAR stores a corresponding relationship between the identifier of the MN and the IP address information allocated to the MN in the binding list established for the MN. The following table 3 is the binding list established by the nAR for the MN, wherein it is assumed that the identifier of the MN is expressed as MN id, and the IP address information allocated by the nAR to the MN is expressed as IPn:

**Table 3**

| | |
|---|---|
| MN id | IPn |

Step 304: the MN obtains the address of the nAR from the RA message, updates the maintained corresponding relationship list and configures an IP address in the first network according to the IP address information in the RA message.

The corresponding relationship list updated by the MN is as shown in the following table 4, wherein the address of the nAR is expressed as nAR-address, and the IP address information allocated by the nAR to the MN is expressed as IPn:

**Table 4**

| | |
|---|---|
| pAR-address | IPp |
| nAR-address | IPn |

Step 305: the MN sends an RS (Router solicitation, router solicitation) message to the nAR, wherein the RS message contains the corresponding relationship between the address of the pAR and the IP address information allocated by the pAR to the MN.

The MN may obtain a corresponding relationship of a session maintained by the MN in other networks excluding the first network by searching the table 4, in the embodiment, i.e., obtaining the corresponding relationship between the pAR-address and the IPp.

Step 306: after receiving the RS message, the nAR establishes one end of a tunnel with the pAR by sending a PBU message to the pAR, wherein the PBU message at least contains the address of the nAR and the identifier of the MN.

After receiving the RS message, the nAR may send the PBU (Proxy Binding Update, proxy binding update) message to the pAR according to the address of the pAR in the RS message, wherein the address of the nAR contained in the RS message may be used for enabling the pAR to finish establishing the tunnel with the nAR according to the address of the nAR, and the identifier of the MN is used for enabling the pAR to find out the binding relationship list established for the MN.

Step 307: the pAR updates the binding list established for the MN and adds the address of the nAR as a delivering address of the MN.

In the PBU message received by the pAR, the address of the nAR and the identifier of the MN therein are obtained, a corresponding relationship table entry maintained for the MN is found out according to the identifier of the MN, and the address of the nAR is added in the table entry as the delivering address of the MN. The following table 5 is the binding list updated by the pAR and established for the MN, and compared with the table 2, the delivering address nAR-address is added.

**Table 5**

| | | |
|---|---|---|
| MN id | IPp | nAR-address |

Step 308: the pAR replies a PBA (Proxy Binding Acknowledgement, proxy binding acknowledgement) message to the nAR according to the address of the nAR in the PBU message, to establish the other end of the tunnel with the nAR.

In addition, the pAR may also delete corresponding relationships of other IP addresses of the MN and AR addresses corresponding to these IP addresses, and remove tunnels established with these ARs.

Step 309: after receiving the PBA message, the nAR updates the binding list established for the MN, and adds the address of the pAR and the IP address information allocated by the pAR to the MN in the binding list.

The following table 6 is the binding list established for the MN and updated by the nAR according to the address of the pAR and the IP address information allocated by the pAR to the MN obtained in step 305, and compared with the table 3, the address of the pAR and the address information allocated by the pAR to the MN are added.

**Table 6**

| | | | |
|---|---|---|---|
| MN id | IPn | pAR-address | IPp |

Step 310: the MN sends a data packet to the nAR.

Since the MN also needs to maintain the session with the CN2 in the second network, these data packets may be data packets sent to the CN1 in the first network, or data packets sent to the CN2 in the second network.

Step 311: the nAR detects a source IP address of the data packet, if the source IP address is allocated by the nAR, a step 312 is executed; and if not, a step 313 is executed.

Step 312: the nAR directly routes the data packet to the CN1 in the first network, and terminates the flow.

When the nAR detects the source IP address of the data packet is allocated by the nAR, it indicates that the current session is a session initiated in the first network. In the embodiment, if a terminal corresponding to the target IP address of the data packet is the CN1 in the first network, the nAR directly routes the data packet to the CN1 in the first network according to the target IP address of the data packet. It should be noted that the terminal corresponding to the target IP address of the data packet may also be a CN in other networks excluding the first network, for example, a CN3 in a third network, at this time, the nAR routes the data packet to an AR in the third network, and the AR in the third network routes the data packet to the CN3.

Step 313: the nAR finds out the address of the pAR corresponding to the source IP address in the binding list.

If the source IP address of the data packet is IPp, then the nAR searches the binding list as shown in table 6 according to the source IP address, and if it can be found out that the source IP address is allocated by the pAR, it indicates that a terminal having a session with the MN is a terminal in the second network.

Step 314: the nAR performs tunnel encapsulation on the data packet, and forwards the data packet to the pAR according to the address of the pAR.

When the nAR performs tunnel encapsulation on the data packet, the address of the nAR is used as an outer layer source IP address of the data packet, and the found out address of the pAR is used as an outer layer target IP address of the data packet. The encapsulated data packet is transmitted to the pAR according to the outer layer target IP address through the established tunnel.

Step 315: after receiving the data packet, the pAR decapsulates the data packet.

After receiving the data packet, the pAR decapsulates to remove the outer layer IP address of the data packet, wherein a source IP address of the decapsulated data packet is IPp, a target IP address is an IP address of the CN2 in the second network, and the data packet may be routed by the pAR in the second network subsequently.

Step 316: the pAR routes the data packet to the CN2 in the second network according to the target IP address of the decapsulated data packet.

Subsequently, when the CN2 sends a data packet to the MN, a source IP address of the data packet is the IP address of the CN2, a target IP address is IPp, the data packet may be firstly routed to the pAR, then the pAR searches the binding list as shown in table 5 according to the IPp to obtain a corresponding delivering address nAR-address, and performs tunnel encapsulation on the data packet, an outer layer target IP address is nAR-address, an outer layer source IP address is pAR-address, after the encapsulated data packet is routed to the nAR according to the outer layer target IP address, the nAR decapsulates the data packet and routes the data packet to the MN by searching the table 6 according to the target IP address IPp of the data packet.

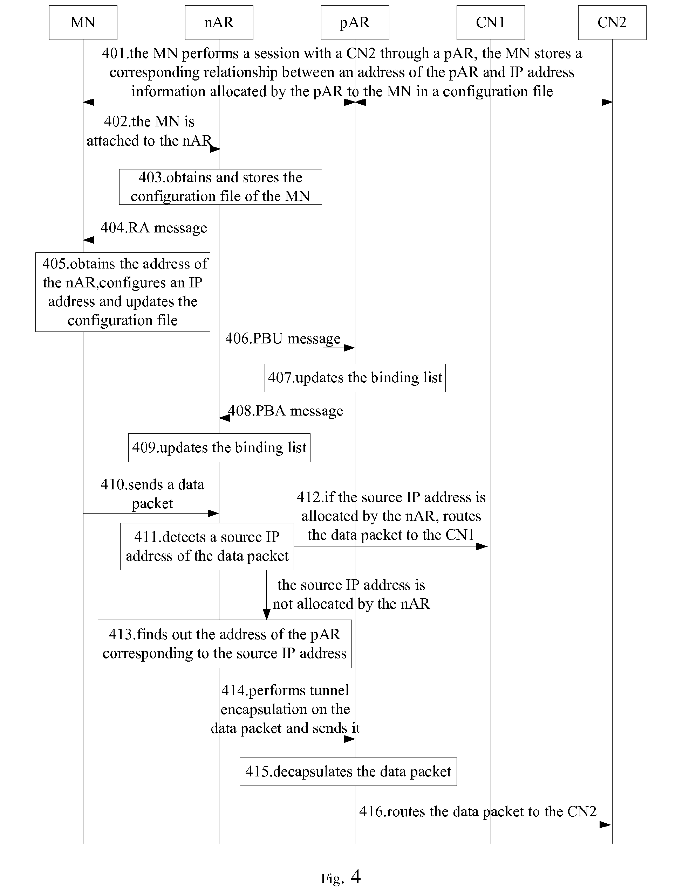

Fig.4 is a flowchart of another embodiment of a method for session routing in the present invention.

Step 401: when an MN is in a second network, the MN performs a session with a CN2 through a pAR, the MN stores a corresponding relationship between an address of the pAR and IP address information allocated by the pAR to the MN in a configuration file, and the pAR establishes a binding list for the MN.

In the embodiment, a corresponding relationship list stored by the MN in the configuration file is consistent with the table 1 in the foregoing embodiment, and the binding list established by the pAR for the MN is consistent with the table 2 in the foregoing embodiment.

Step 402: after entering a first network in which an nAR is located, the MN is attached to the nAR, and the nAR establishes a binding list for the MN.

Step 403: the nAR obtains and stores the configuration file of the MN, wherein the configuration file contains the corresponding relationship between the address of the pAR and the IP address information allocated by the pAR to the MN.

Step 404: the nAR sends an RA message to the MN, wherein the RA message at least contains IP address information allocated by the nAR to the MN and an address of the nAR.

The global address of the nAR is carried by a prefix information option (prefix information option) in the RA message. The nAR stores a corresponding relationship between the identifier of the MN and the IP address information allocated to the MN in the binding list established for the MN. The binding list established by the nAR for the MN is consistent with the table 3 in the foregoing embodiment.

Step 405: the MN obtains the address of the nAR from the RA message, updates the obtained configuration file and configures an IP address in the first network according to the IP address information in the RA message.

The configuration file updated by the MN is consistent with the table 4 in the foregoing embodiment.

Step 406: the nAR establishes one end of a tunnel with the pAR by sending a PBU message to the pAR, wherein the PBU message at least contains the address of the nAR and the identifier of the MN.

It should be noted that the step 406 may be executed with the foregoing step 404 simultaneously.

Step 407: the pAR updates the binding list established for the MN and adds the address of the nAR as a delivering address of the MN.

In the PBU message received by the pAR, the address of the nAR and the identifier of the MN therein are obtained, a corresponding relationship table entry maintained for the MN is found out according to the identifier of the MN, and the address of the nAR is added in the table entry as the delivering address of the MN. The binding list updated by the pAR is consistent with the table 5 in the foregoing embodiment.

Step 408: the pAR replies a PBA message to the nAR according to the address of the nAR in the PBU message, to establish the other end of the tunnel with the nAR.

In addition, the pAR may delete corresponding relationships of other IP addresses of the MN and AR addresses corresponding to these IP addresses, and remove the tunnels established with these ARs.

Step 409: after receiving the PBA message, the nAR updates the binding list established for the MN, and adds the address of the pAR and the IP address information allocated by the pAR to the MN in the binding list.

The nAR updates the binding list established for the MN according to the address of the pAR and the IP address information allocated by the pAR to the MN stored in the configuration file in step 403, and the binding list is consistent with the table 6 in the foregoing embodiment.

Step 410: the MN sends a data packet to the nAR.

Since the MN also needs to maintain the session with the CN2 in the second network, these data packets may be data packets sent to the CN1 in the first network, or data packets sent to the CN2 in the second network.

Step 411: the nAR detects a source IP address of the data packet, if the source IP address is allocated by the nAR, a step 412 is executed; and if not, a step 413 is executed.

Step 412: the nAR directly routes the data packet to the CN1 in the first network, and terminates the flow.

When the nAR detects that the source IP address of the data packet is allocated by the nAR, it indicates that the current session is a session initiated in the first network. In the embodiment, if a terminal corresponding to the target IP address of the data packet is the CN1 in the first network, the nAR directly routes the data packet to the CN1 in the first network according to the target IP address of the data packet. It should be noted that the terminal corresponding to the target IP address of the data packet may also be a CN in other networks excluding the first network, for example, a CN3 in a third network, at this time, the nAR routes the data packet to an AR in the third network, and the AR in the third network routes the data packet to the CN3.

Step 413: the nAR finds out the address of the pAR corresponding to the source IP address in the binding list.

If the source IP address of the data packet is IPp, then the nAR searches the binding list as shown in table 6 according to the source IP address, and if it can be found out that the source IP address is allocated by the pAR, it indicates that the session is a session initiated in the second network.

Step 414: the nAR performs tunnel encapsulation on the data packet, and forwards the data packet to the pAR according to the address of the pAR.

When the nAR performs tunnel encapsulation on the data packet, the address of the nAR is used as an outer layer source IP address of the data packet, and the found out address of the pAR is used as an outer layer target IP address of the data packet. The encapsulated data packet is transmitted to the pAR according to the outer layer target IP address through the established tunnel.

Step 415: after receiving the data packet, the pAR decapsulates the data packet.

After receiving the data packet, the pAR decapsulates to remove the outer layer IP address of the data packet, wherein a source IP address of the decapsulated data packet is IPp, a target IP address is an IP address of the CN2 in the second network, and the data packet may be routed by the pAR in the second network subsequently.

Step 416: the pAR routes the data packet to the CN2 in the second network according to the target IP address of the decapsulated data packet.

Subsequently, when the CN2 sends a data packet to the MN, a source IP address of the data packet is the IP address of the CN2, a target IP address is IPp, the data packet may be firstly routed to the pAR, then the pAR searches the binding list as shown in table 5 according to the IPp to obtain a corresponding delivering address nAR-address, and performs tunnel encapsulation on the data packet, an outer layer target IP address is nAR-address, an outer layer source IP address is pAR-address, after the encapsulated data packet is routed to the nAR according to the outer layer target IP address, the nAR decapsulates the data packet and routes the data packet to the MN by searching the table 6 according to the target IP address IPp of the data packet.

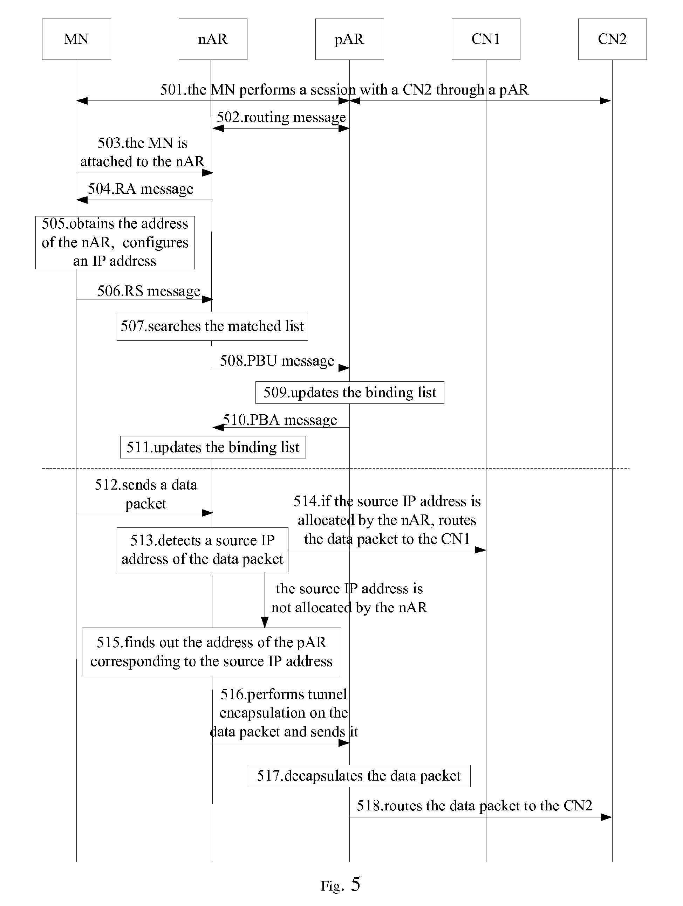

Fig.5 is a flowchart of another embodiment of a method for session routing in the present invention.

Step 501: when an MN is in a second network, the MN performs a session with a CN2 through a pAR, the MN stores IP address information allocated by the pAR to the MN, and the pAR establishes a binding list for the MN.

In the embodiment, the binding list established by the pAR for the MN is consistent with the table 2 in the foregoing embodiment.

Step 502: an nAR and the pAR interact corresponding relationships between addresses and IP address domains of themselves through a routing message, and store these corresponding relationships through matched lists.

The IP address domain refers to a set of all IP address information capable of being allocated by each AR to the MN, and IP address information allocated to one MN at each time is selected from the IP address domain. The pAR may transmit the corresponding relationship between the address of the pAR and the IP address domain capable of being allocated by the pAR to the MN through the routing message.

Step 503: after entering a first network in which the nAR is located, the MN is attached to the nAR, and the nAR establishes a binding list for the MN.

The binding list established by the nAR for the MN is consistent with the table 3 in the foregoing embodiment.

Step 504: the nAR sends an RA message to the MN, wherein the RA message at least contains IP address information allocated by the nAR to the MN.

Step 505: the MN obtains the IP address information from the RA message, and configures an IP address in the first network.

Step 506: the MN sends an RS message to the nAR, wherein the RS message contains IP address information needing to maintain a session, and the IP address information is allocated by the pAR.

It should be noted that the step may be executed with step 505 simultaneously.

Step 507: the nAR searches the matched list to obtain the address of the pAR corresponding to the IP address information in the RS message.

After receiving the RS message, the nAR obtains the IP address information needing to maintain the session from the RS message, searches the matched list to obtain the IP address domain to which the IP address information belongs, and then obtains the address of the pAR corresponding to the IP address domain.

Step 508: the nAR establishes one end of a tunnel with the pAR by sending a PBU message to the pAR, wherein the PBU message at least contains the address of the nAR and the identifier of the MN.

Step 509: the pAR updates the binding list established for the MN and adds the address of the nAR as a delivering address of the MN.

In the PBU message received by the pAR, the address of the nAR and the identifier of the MN therein are obtained, a corresponding relationship table entry maintained for the MN is found out according to the identifier of the MN, and the address of the nAR is added in the table entry as the delivering address of the MN. The binding list updated by the pAR is consistent with the table 5 in the foregoing embodiment.

Step 510: the pAR replies a PBA message to the nAR according to the address of the nAR in the PBU message, to establish the other end of the tunnel with the nAR.

Step 511: after receiving the PBA message, the nAR updates the binding list established for the MN, and adds the address of the pAR and the IP address information allocated by the pAR to the MN in the binding list.

The binding list established for the MN and updated by the nAR is consistent with the table 6 in the foregoing embodiment.

Step 512: the MN sends a data packet to the nAR.

Since the MN also needs to maintain the session with the CN2 in the second network, these data packets may be data packets sent to the CN1 in the first network, or data packets sent to the CN2 in the second network.

Step 513: the nAR detects a source IP address of the data packet, if the source IP address is allocated by the nAR, a step 514 is executed; and if not, a step 515 is executed.

Step 514: the nAR directly routes the data packet to the CN1 in the first network, and terminates the flow.

If the nAR detects that the source IP address of the data packet is allocated by the nAR, it indicates that the current session is a session initiated in the first network. In the embodiment, if a terminal corresponding to the target IP address of the data packet is the CN1 in the first network, then the nAR directly routes the data packet to the CN1 in the first network according to the target IP address of the data packet. It should be noted that the terminal corresponding to the target IP address of the data packet may also be a CN in other networks excluding the first network, for example, a CN3 in a third network, at this time, the nAR routes the data packet to an AR in the third network, and the AR in the third network routes the data packet to the CN3.

Step 515: the nAR finds out the address of the pAR corresponding to the source IP address in the binding list.

if the source IP address of the data packet is IPp, then the nAR searches the binding list as shown in table 6 according to the source IP address, and if it can be found out that the source IP address is allocated by the pAR, it indicates that the session is a session initiated in the second network.

Step 516: the nAR performs tunnel encapsulation on the data packet, and forwards the data packet to the pAR according to the address of the pAR.

When the nAR performs tunnel encapsulation on the data packet, the address of the nAR is used as an outer layer source IP address of the data packet, and the found out address of the pAR is used as an outer layer target IP address of the data packet. The encapsulated data packet is transmitted to the pAR according to the outer layer target IP address through the established tunnel.

Step 517: after receiving the data packet, the pAR decapsulates the data packet.

After receiving the data packet, the pAR decapsulates to remove the outer layer IP address of the data packet, wherein a source IP address of the decapsulated data packet is IPp, a target IP address is an IP address of the CN2 in the second network, and the data packet may be routed by the pAR in the second network subsequently.

Step 518: the pAR routes the data packet to the CN2 in the second network according to the target IP address of the decapsulated data packet.

Subsequently, when the CN2 sends a data packet to the MN, a source IP address of the data packet is the IP address of the CN2, a target IP address is IPp, the data packet may be firstly routed to the pAR, then the pAR searches the binding list as shown in table 5 according to the IPp to obtain a corresponding delivering address nAR-address, and performs tunnel encapsulation on the data packet, an outer layer target IP address is nAR-address, an outer layer source IP address is pAR-address, after the encapsulated data packet is routed to the nAR according to the outer layer target IP address, the nAR decapsulates the data packet and routes the data packet to the MN by searching the table 6 according to the target IP address IPp of the data packet.

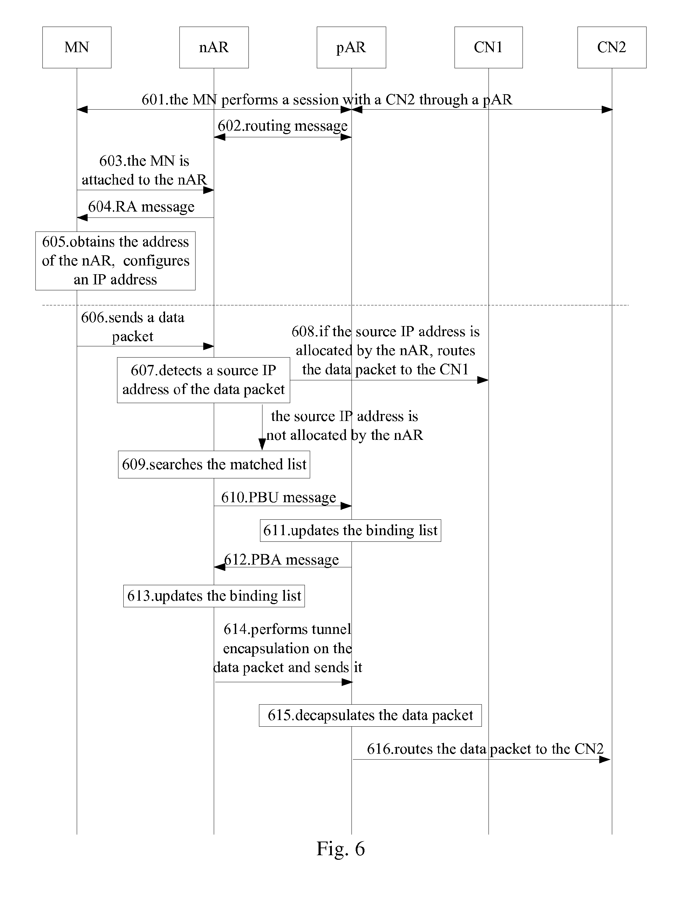

Fig.6 is a flowchart of another embodiment of a method for session routing in the present invention.

Step 601: when an MN is in a second network, the MN performs a session with a CN2 through a pAR, the MN stores IP address information allocated by the pAR to the MN, and the pAR establishes a binding list for the MN.

In the embodiment, the binding list established by the pAR for the MN is consistent with the table 2 in the foregoing embodiment.

Step 602: an nAR and the pAR interact corresponding relationships between addresses and IP address domains of themselves through a routing message, and store these corresponding relationships through matched lists.

The IP address domain refers to a set of all IP address information capable of being allocated by each AR to the MN, and IP address information allocated to one MN at each time is selected from the IP address domain. The pAR may transmit the corresponding relationship between the address of the pAR and the IP address domain capable of being allocated by the pAR to the MN through the routing message.

Step 603: after entering a first network in which the nAR is located, the MN is attached to the nAR, and the nAR establishes a binding list for the MN.

Step 604: the nAR sends an RA message to the MN, wherein the RA message at least contains IP address information allocated by the nAR to the MN.

Step 605: the MN obtains the IP address information from the RA message, and configures an IP address in the first network.

Step 606: the MN sends a data packet to the nAR.

Since the MN also needs to maintain the session with the CN2 in the second network, these data packets may be data packets sent to the CN1 in the first network, or data packets sent to the CN2 in the second network.

Step 607: the nAR detects a source IP address of the data packet, if the source IP address is allocated by the nAR, a step 608 is executed; and if not, a step 609 is executed.

Step 608: the nAR directly routes the data packet to the CN1 in the first network, and terminates the flow.

When the nAR detects that the source IP address of the data packet is allocated by the nAR, it indicates that the current session is a session initiated in the first network. In the embodiment, if a terminal corresponding to the target IP address of the data packet is the CN1 in the first network, then the nAR directly routes the data packet to the CN1 in the first network according to the target IP address of the data packet. It should be noted that the terminal corresponding to the target IP address of the data packet may also be a CN in other networks excluding the first network, for example, a CN3 in a third network, at this time, the nAR routes the data packet to an AR in the third network, and the AR in the third network routes the data packet to the CN3.

Step 609: the nAR searches the matched list to obtain the address of the pAR corresponding to the IP address information of the source IP address.

The nAR searches the matched list to obtain the IP address domain to which the IP address information belongs, and then obtains the address of the pAR corresponding to the IP address domain.

Step 610: the nAR establishes one end of a tunnel with the pAR by sending a PBU message to the pAR, wherein the PBU message at least contains the address of the nAR and the identifier of the MN.

Step 611: the pAR updates the binding list established for the MN and adds the address of the nAR as a delivering address of the MN.

In the PBU message received by the pAR, the address of the nAR and the identifier of the MN therein are obtained, a corresponding relationship table entry maintained for the MN is found out according to the identifier of the MN, and the address of the nAR is added in the table entry as the delivering address of the MN. The binding list updated by the pAR is consistent with the table 5 in the foregoing embodiment.

Step 612: the pAR replies a PBA message to the nAR according to the address of the nAR in the PBU message, to establish the other end of the tunnel with the nAR.

Step 613: after receiving the PBA message, the nAR updates the binding list established for the MN, and adds the address of the pAR and the IP address information allocated to the MN in the binding list.

The binding list established for the MN and updated by the nAR is consistent with the table 6 in the foregoing embodiment.

Step 614: the nAR performs tunnel encapsulation on the data packet, and forwards the data packet to the pAR according to the address of the pAR.

When the nAR performs tunnel encapsulation on the data packet, the address of the nAR is used as an outer layer source IP address of the data packet, and the found out address of the pAR is used as an outer layer target IP address of the data packet. The encapsulated data packet is transmitted to the pAR according to the outer layer target IP address through the established tunnel.

Step 615: after receiving the data packet, the pAR decapsulates the data packet.

After receiving the data packet, the pAR decapsulates to remove the outer layer IP address of the data packet, wherein a source IP address of the decapsulated data packet is IPp, a target IP address is an IP address of the CN2 in the second network, and the data packet may be routed by the pAR in the second network subsequently.

Step 616: the pAR routes the data packet to the CN2 in the second network according to the target IP address of the decapsulated data packet.

Subsequently, when the CN2 sends a data packet to the MN, a source IP address of the data packet is the IP address of the CN2, a target IP address is IPp, the data packet may be firstly routed to the pAR, then the pAR searches the binding list as shown in table 5 according to the IPp to obtain a corresponding delivering address nAR-address, and performs tunnel encapsulation on the data packet, an outer layer target IP address is nAR-address, an outer layer source IP address is pAR-address, after the encapsulated data packet is routed to the nAR according to the outer layer target IP address, the nAR decapsulates the data packet and routes the data packet to the MN by searching the table 6 according to the target IP address IPp of the data packet.

Corresponding to the embodiments of the method for session routing of the present invention, the present invention further provides embodiments of a device and a system for session routing.

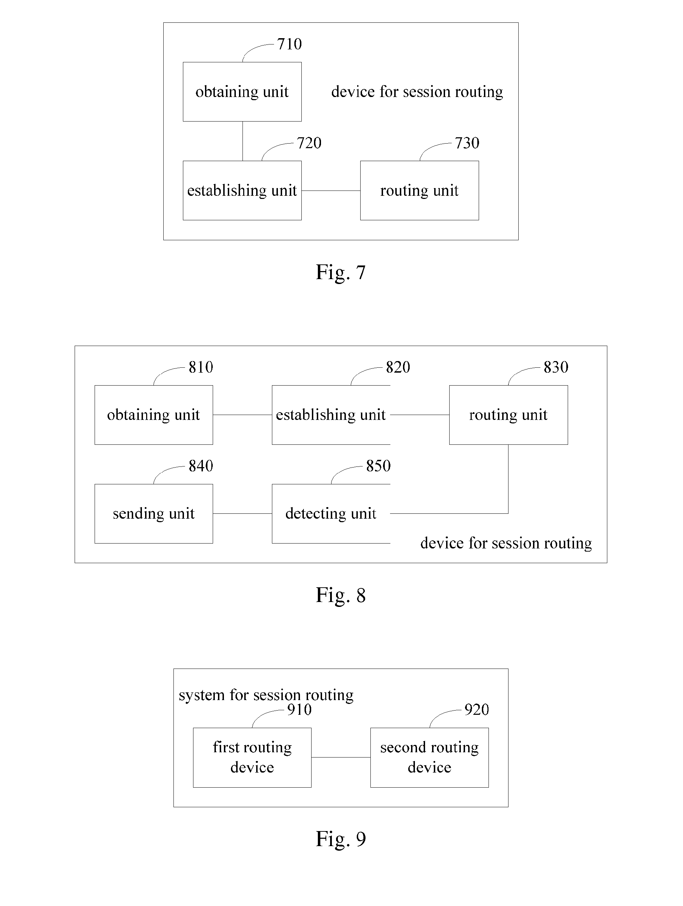

Fig.7 is a block diagram of an embodiment of a device for session routing in the present invention. The device for session routing serves as a first routing device in a first network and includes: an obtaining unit 710, an establishing unit 720 and a routing unit 730:
the obtaining unit 710 is configured to obtain, when a first terminal enters the first network in which the first routing device is located, an address of a second routing device in a second network;
the establishing unit 720 is configured to establish a tunnel with the second routing device according to the address of the second routing device obtained by the obtaining unit 710; and
the routing unit 730 is configured to maintain a session between the first terminal and the second routing device through the tunnel established by the establishing unit 720, so that the second routing device routes the session to a second terminal in the second network.

In a specific embodiment:
the obtaining unit 710 may include (not shown in Fig.7):
   a first obtaining subunit, configured to receive a router solicitation message sent by the first terminal, wherein the router solicitation message contains the address of the second routing device and IP address information allocated by the second routing device to the first terminal;
the establishing unit 720 may include (not shown in Fig.7):
   a first address obtaining subunit, configured to obtain the address of the second routing device from the router solicitation message received by the first obtaining subunit;
   a first message sending subunit, configured to send a proxy binding update message to the second routing device according to the address of the second routing device obtained by the first address obtaining subunit, wherein the proxy binding update message contains an address of the first routing device;
   a first message receiving subunit, configured to receive a proxy binding acknowledgement message replied by the second routing device according to the address of the first routing device sent by the first message sending subunit;
   a first information storing subunit, configured to, after the first message receiving subunit receives the proxy binding acknowledgement message, store the address of the second routing device received by the first obtaining subunit and the IP address information allocated by the second routing device to the first terminal, and finish establishing the tunnel with the second routing device;
the routing unit 730 may include (not shown in Fig.7):
   a first data packet receiving subunit, configured to receive a data packet transmitted by the first terminal;
   a first address information detecting subunit, configured to detect whether address information of a source IP address of the data packet received by the data packet receiving subunit is allocated by the second routing device; and
   a first data packet routing subunit, configured to, when a detecting result of the first address information detecting subunit is yes, route the data packet received by the first data packet receiving subunit to the second routing device through the tunnel established by the establishing unit, according to the address of the second routing device obtained by the obtaining unit.

In another specific embodiment:
the obtaining unit 710 may include (not shown in Fig.7):
   a second obtaining subunit, configured to obtain a configuration file stored in the first terminal, wherein the configuration file contains the address of the second routing device and IP address information allocated by the second routing device to the first terminal;
the establishing unit 720 may include (not shown in Fig.7):
   a second address obtaining subunit, configured to obtain the address of the second routing device from the configuration file obtained by the second obtaining subunit;
   a second message sending subunit, configured to send a proxy binding update message to the second routing device according to the address of the second routing device obtained by the second address obtaining subunit, wherein the proxy binding update message contains an address of the first routing device;
   a second message receiving subunit, configured to receive a proxy binding acknowledgement message replied by the second routing device according to the address of the first routing device sent by the second message sending subunit;
   a second information storing subunit, configured to, after the second message receiving subunit receives the proxy binding acknowledgement message, store the address of the second routing device obtained by the second obtaining subunit and the IP address information allocated by the second routing device to the first terminal, and finish establishing the tunnel with the second routing device;
the routing unit 730 may include (not shown in Fig.7):
   a first data packet receiving subunit, configured to receive a data packet transmitted by the first terminal;
   a first address information detecting subunit, configured to detect whether address information of a source IP address of the data packet received by the data packet receiving subunit is allocated by the second routing device; and
   a first data packet routing subunit, configured to, when a detecting result of the first address information detecting subunit is yes, route the data packet received by the first data packet receiving subunit to the second routing device through the tunnel established by the establishing unit 730, according to the address of the second routing device obtained by the obtaining unit.

In another specific embodiment:
the obtaining unit 710 may include (not shown in Fig.7):
   a third obtaining subunit, configured to receive a routing interactive message sent by the second routing device, wherein the routing interactive message contains the address of the second routing device and an IP address information domain of the second routing device;
the establishing unit 720 may include (not shown in Fig.7):
   a third routing message receiving subunit, configured to receive a router solicitation message sent by the first terminal, wherein the router solicitation message contains IP address information allocated by the second routing device to the first terminal;
   a third address obtaining subunit, configured to, when searching out that the IP address information received by the third routing message receiving subunit belongs to the IP address information domain of the second routing device received by the third obtaining subunit, obtain the address of the second routing device corresponding to the IP address information domain of the second routing device;
   a third message sending subunit, configured to send a proxy binding update message to the second routing device according to the address of the second routing device obtained by the third address obtaining subunit, wherein the proxy binding update message contains an address of the first routing device;
   a third message receiving subunit, configured to receive a proxy binding acknowledgement message replied by the second routing device according to the address of the first routing device sent by the third message sending subunit;
   a third information storing subunit, configured to, after the third message receiving subunit receives the proxy binding acknowledgement message, store the address of the second routing device and the IP address information allocated by the second routing device to the first terminal, and finish establishing the tunnel with the second routing device;
the routing unit 730 may include (not shown in Fig.7):
   a first data packet receiving subunit, configured to receive a data packet transmitted by the first terminal;
   a first address information detecting subunit, configured to detect whether address information of a source IP address of the data packet received by the data packet receiving subunit is allocated by the second routing device; and
   a first data packet routing subunit, configured to, when a detecting result of the first address information detecting subunit is yes, route the data packet received by the first data packet receiving subunit to the second routing device through the tunnel established by the establishing unit, according to the address of the second routing device obtained by the obtaining unit.

In another specific embodiment:
the obtaining unit 710 may include (not shown in Fig.7):
   a third obtaining subunit, configured to receive a routing interactive message sent by the second routing device, wherein the routing interactive message contains the address of the second routing device and the IP address information domain of the second routing device;
the establishing unit 720 may include (not shown in Fig.7):
   a fourth data packet receiving subunit, configured to receive a data packet transmitted by the first terminal;
   a fourth address obtaining subunit, configured to, when the first routing device searches out that the source IP address information of the data packet received by the fourth data packet receiving subunit belongs to the IP address information domain of the second routing device received by the third obtaining subunit, obtain the address of the second routing device corresponding to the IP address information domain of the second routing device;
   a fourth message sending subunit, configured to send a proxy binding update message to the second routing device according to the address of the second routing device obtained by the fourth address obtaining subunit, wherein the proxy binding update message contains an address of the first routing device;
   a fourth message receiving subunit, configured to receive a proxy binding acknowledgement message replied by the second routing device according to the address of the first routing device sent by the fourth message sending subunit;
   a fourth information storing subunit, configured to, after the fourth message receiving subunit receives the proxy binding acknowledgement message, store the address of the second routing device and IP address information allocated by the second routing device to the first terminal, and finish establishing the tunnel with the second routing device;
the routing unit 730 may include (not shown in Fig.7):
   a second data packet routing subunit, configured to route the data packet received by the fourth data packet receiving subunit to the second routing device through the tunnel according to the address of the second routing device.

Fig.8 is a block diagram of another embodiment of a device for session routing in the present invention. The device for session routing serves as a first routing device in a first network and includes: an obtaining unit 810, an establishing unit 820, a routing unit 830, a sending unit 840, a detecting unit 850 and a routing unit 860:
the obtaining unit 810 is configured to obtain, when a first terminal enters the first network in which the first routing device is located, an address of a second routing device in a second network;
the establishing unit 820 is configured to establish a tunnel with the second routing device according to the address of the second routing device obtained by the obtaining unit 810;
the routing unit 830 is configured to maintain a session between the first terminal and the second routing device through the tunnel established by the establishing unit 820, so that the second routing device routes the session to a second terminal in the second network;
the sending unit 840 is configured to send a router advertisement message to the first terminal, wherein the router advertisement message contains an address of the first routing device and IP address information allocated by the first routing device to the first terminal, so that the first terminal stores a corresponding relationship between the address of the first routing device and the IP address information allocated by the first routing device to the first terminal, and configures an IP address of the first terminal in the first network according to the IP address information;
the detecting unit 850 is configured to, after receiving a data packet sent by the first terminal, detect that a source IP address of the data packet is the IP address of the first terminal in the first network allocated by the first terminal according to the IP address information sent by the sending unit 840; and
the routing unit 830 is further configured to, when the detecting unit 850 detects that the source IP address of the data packet is the IP address of the first terminal in the first network, route the data packet to a third terminal corresponding to a target IP address according to the target IP address of the data packet.

In a specific embodiment:
the obtaining unit 810 may include (not shown in Fig.8):
   a first obtaining subunit, configured to receive a router solicitation message sent by the first terminal, wherein the router solicitation message contains the address of the second routing device and IP address information allocated by the second routing device to the first terminal;
the establishing unit 820 may include (not shown in Fig.8):
   a first address obtaining subunit, configured to obtain the address of the second routing device from the router solicitation message received by the first obtaining subunit;
   a first message sending subunit, configured to send a proxy binding update message to the second routing device according to the address of the second routing device obtained by the first address obtaining subunit, wherein the proxy binding update message contains an address of the first routing device;
   a first message receiving subunit, configured to receive a proxy binding acknowledgement message replied by the second routing device according to the address of the first routing device sent by the first message sending subunit;
   a first information storing subunit, configured to, after the first message receiving subunit receives the proxy binding acknowledgement message, store the address of the second routing device received by the first obtaining subunit and the IP address information allocated by the second routing device to the first terminal, and finish establishing the tunnel with the second routing device;
the routing unit 830 may include (not shown in Fig.8):
   a first data packet receiving subunit, configured to receive a data packet transmitted by the first terminal;
   a first address information detecting subunit, configured to detect whether the address information of a source IP address of the data packet received by the data packet receiving subunit is allocated by the second routing device; and
   a first data packet routing subunit, configured to, when a detecting result of the first address information detecting subunit is yes, route the data packet received by the first data packet receiving subunit to the second routing device through the tunnel established by the establishing unit, according to the address of the second routing device obtained by the obtaining unit.

In another specific embodiment:
the obtaining unit 810 may include (not shown in Fig.8):
   a second obtaining subunit, configured to obtain a configuration file stored in the first terminal, wherein the configuration file contains the address of the second routing device and IP address information allocated by the second routing device to the first terminal;
the establishing unit 820 may include (not shown in Fig.8):
   a second address obtaining subunit, configured to obtain the address of the second routing device from the configuration file obtained by the second obtaining subunit;
   a second message sending subunit, configured to send a proxy binding update message to the second routing device according to the address of the second routing device obtained by the second address obtaining subunit, wherein the proxy binding update message contains an address of the first routing device;
   a second message receiving subunit, configured to receive a proxy binding acknowledgement message replied by the second routing device according to the address of the first routing device sent by the second message sending subunit;
   a second information storing subunit, configured to, after the second message receiving subunit receives the proxy binding acknowledgement message, store the address of the second routing device obtained by the second obtaining subunit and the IP address information allocated by the second routing device to the first terminal, and finish establishing the tunnel with the second routing device;
the routing unit 830 may include (not shown in Fig.8):
   a first data packet receiving subunit, configured to receive a data packet transmitted by the first terminal;
   a first address information detecting subunit, configured to detect whether address information of a source IP address of the data packet received by the data packet receiving subunit is allocated by the second routing device; and
   a first data packet routing subunit, configured to, when a detecting result of the first address information detecting subunit is yes, route the data packet received by the first data packet receiving subunit to the second routing device through the tunnel established by the establishing unit 830, according to the address of the second routing device obtained by the obtaining unit.

In another specific embodiment:
the obtaining unit 810 may include (not shown in Fig.8):
   a third obtaining subunit, configured to receive a routing interactive message sent by the second routing device, wherein the routing interactive message contains the address of the second routing device and an IP address information domain of the second routing device;
the establishing unit 820 may include (not shown in Fig.8):
   a third routing message receiving subunit, configured to receive a router solicitation message sent by the first terminal, wherein the router solicitation message contains the IP address information allocated by the second routing device to the first terminal;
   a third address obtaining subunit, configured to, when searching out that the IP address information received by the third routing message receiving subunit belongs to the IP address information domain of the second routing device received by the third obtaining subunit, obtain the address of the second routing device corresponding to the IP address information domain of the second routing device;
   a third message sending subunit, configured to send a proxy binding update message to the second routing device according to the address of the second routing device obtained by the third address obtaining subunit, wherein the proxy binding update message contains an address of the first routing device;
   a third message receiving subunit, configured to receive a proxy binding acknowledgement message replied by the second routing device according to the address of the first routing device sent by the third message sending subunit;
   a third information storing subunit, configured to, after the third message receiving subunit receives the proxy binding acknowledgement message, store the address of the second routing device and the IP address information allocated by the second routing device to the first terminal, and finish establishing the tunnel with the second routing device;
the routing unit 830 may include (not shown in Fig.8):
   a first data packet receiving subunit, configured to receive a data packet transmitted by the first terminal;
   a first address information detecting subunit, configured to detect whether address information of a source IP address of the data packet received by the data packet receiving subunit is allocated by the second routing device; and
   a first data packet routing subunit, configured to, when a detecting result of the first address information detecting subunit is yes, route the data packet received by the first data packet receiving subunit to the second routing device through the tunnel established by the establishing unit, according to the address of the second routing device obtained by the obtaining unit.

In another specific embodiment:
the obtaining unit 810 may include (not shown in Fig.8):
   a third obtaining subunit, configured to receive a routing interactive message sent by the second routing device, wherein the routing interactive message contains the address of the second routing device and the IP address information domain of the second routing device;
the establishing unit 820 may include (not shown in Fig.8):
   a fourth data packet receiving subunit, configured to receive a data packet transmitted by the first terminal;
   a fourth address obtaining subunit, configured to, when the first routing device searches out that the source IP address information of the data packet received by the fourth data packet receiving subunit belongs to the IP address information domain of the second routing device received by the third obtaining subunit, obtain the address of the second routing device corresponding to the IP address information domain of the second routing device;
   a fourth message sending subunit, configured to send a proxy binding update message to the second routing device according to the address of the second routing device obtained by the fourth address obtaining subunit, wherein the proxy binding update message contains an address of the first routing device;
   a fourth message receiving subunit, configured to receive a proxy binding acknowledgement message replied by the second routing device according to the address of the first routing device sent by the fourth message sending subunit;
   a fourth information storing subunit, configured to, after the fourth message receiving subunit receives the proxy binding acknowledgement message, store the address of the second routing device and IP address information allocated by the second routing device to the first terminal, and finish establishing the tunnel with the second routing device;
the routing unit 830 may include (not shown in Fig.8):
   a second data packet routing subunit, configured to route the data packet received by the fourth data packet receiving subunit to the second routing device through the tunnel according to the address of the second routing device.

Fig.9 is a block diagram of an embodiment of a system for session routing in the present invention.

The system for session routing includes: a first routing device 910 and a second routing device 920.

The first routing device 910 is configured to, when a first terminal enters a first network in which the first routing device 910 is located, obtain an address of the second routing device 920 in a second network, establish a tunnel with the second routing device 920 according to the address of the second routing device 920, and maintain a session between the first terminal and the second routing device 920 through the tunnel; and
the second routing device 920 is configured to route the session to a second terminal in the second network.

Further, the first routing device 910 is further configured to, after the first terminal enters the first network in which the first routing device 910 is located, send a router advertisement message to the first terminal, wherein the router advertisement message contains an address of the first routing device and IP address information allocated by the first routing device to the first terminal, so that the first terminal stores a corresponding relationship between the address of the first routing device and the IP address information allocated by the first routing device to the first terminal, and configures an IP address of the first terminal in the first network according to the IP address information; and after receiving a data packet sent by the first terminal according to the address of the first routing device, detect that address information of a source IP address of the data packet is allocated by the first routing device, and route the data packet to a third terminal in the first network.

Further, the first routing device 910 is further configured to, after the first terminal enters the first network in which the first routing device 910 is located, send a router advertisement message to the first terminal, wherein the router advertisement message contains an address of the first routing device and IP address information allocated by the first routing device to the first terminal, so that the first terminal stores a corresponding relationship between the address of the first routing device and the IP address information allocated by the first routing device to the first terminal, and configure an IP address of the first terminal in the first network according to the IP address information; and after receiving a data packet sent by the first terminal, detect that a source IP address of the data packet is the IP address of the first terminal in the first network, and route the data packet to the third terminal corresponding to a target IP address according to the target IP address of the data packet.

It should be noted that, in each system for session routing in the embodiments of the present invention, the routing device to which the terminal is attached is generally called as the first routing device, and the routing device still needing to maintain the session with the terminal in other networks is called as the second routing device, namely, the number of the second routing device may be more than one, the process of performing the session between each second routing device and the first routing device is consistent, therefore, the second routing device in the embodiments of the present invention is used for uniform description, and the second routing device should not be construed as limitation of merely one second routing device in the system.

It can be seen from the above-mentioned embodiments that, when the first terminal enters the first network in which the first routing device is located, the first routing device obtains the address of the second routing device in the second network, the first routing device establishes the tunnel with the second routing device according to the address of the second routing device, and maintains the session between the first terminal and the second routing device through the tunnel, so that the second routing device routes the session to the second terminal in the second network. In the embodiments of the present invention, there is no need to set a home network for the terminal, the terminal may no longer belong to a fixed routing device in the home network, when the terminal enters a network, session routing between the terminal and a routing device in other networks is achieved by a routing device to which the terminal is attached in the network, and since the routing device to which the terminal belongs varies with the network in which the terminal is located, the communication traffic of the terminal may not be concentrated on one routing device for forwarding, thus reducing the processing load of a single routing device. In addition, in the embodiments of the present invention, there is no need to store the information of the tunnel established between the first routing device and the second routing device through a third party storage device, so that the network structure is simple, and the single point failure problem of the third party storage device is avoided.

It is worth noting that, in the embodiments of the above-mentioned device for session routing, the included units are only divided according to functional logic, but are not limited to the above-mentioned division, as long as corresponding functions can be achieved; and in addition, the specific names of the functional units are merely for convenience of mutual distinction, rather than limiting the protection scope of the present invention.

In addition, those of ordinary skill in the art may understand that all or a part of the steps in the above-mentioned method embodiments may be implemented with a computer program instructing related hardware, the corresponding program may be stored in a computer readable storage medium, and the above-mentioned storage medium may be a read-only memory, magnetic disk or an optical disk, etc.

The foregoing descriptions are merely preferred specific implementation manners of the invention, rather than limiting the protection scope of the invention. Any change or substitution that is readily conceived for any one skilled in the art within the technical scope disclosed by the invention shall fall into the protection scope of the invention. Therefore, the protection scope of the present invention shall be defined by the claims.

## Claims

1. A method for session routing, comprising:
obtaining, by a first routing device, when a first terminal enters a first network in which the first routing device is located, an address of a second routing device in a second network;
establishing, by the first routing device, a tunnel with the second routing device according to the address of the second routing device; and
maintaining, by the first routing device, a session between the first terminal and the second routing device through the tunnel, so that the second routing device routes the session to a second terminal in the second network.

2. The method of claim 1, wherein the obtaining, by the first routing device, the address of the second routing device in the second network comprises:
receiving, by the first routing device, a router solicitation message sent by the first terminal, wherein the router solicitation message contains the address of the second routing device and IP address information allocated by the second routing device to the first terminal; or,
obtaining, by the first routing device, a configuration file stored in the first terminal, wherein the configuration file contains the address of the second routing device and IP address information allocated by the second routing device to the first terminal; or,
receiving, by the first routing device, a routing interactive message sent by the second routing device, wherein the routing interactive message contains the address of the second routing device and an IP address information domain of the second routing device.

3. The method of claim 2, wherein the establishing, by the first routing device, the tunnel with the second routing device according to the address of the second routing device comprises:
obtaining, by the first routing device, when receiving the router solicitation message sent by the first terminal, the address of the second routing device from the router solicitation message; sending a proxy binding update message to the second routing device according to the address of the second routing device, wherein the proxy binding update message contains an address of the first routing device; after receiving a proxy binding acknowledgement message replied by the second routing device according to the address of the first routing device, storing the address of the second routing device and the IP address information allocated by the second routing device to the first terminal, and finishing the establishing the tunnel with the second routing device; or,
obtaining, by the first routing device, when obtaining the configuration file stored in the first terminal, the address of the second routing device from the configuration file; sending a proxy binding update message to the second routing device according to the address of the second routing device, wherein the proxy binding update message contains an address of the first routing device; after receiving a proxy binding acknowledgement message replied by the second routing device according to the address of the first routing device, storing the address of the second routing device and the IP address information allocated by the second routing device to the first terminal, and finishing the establishing the tunnel with the second routing device; or,
receiving, by the first routing device, when receiving the routing interactive message sent by the second routing device, a router solicitation message sent by the first terminal, wherein the router solicitation message contains IP address information allocated by the second routing device to the first terminal; when searching out that the IP address information belongs to the IP address information domain of the second routing device, obtaining the address of the second routing device corresponding to the IP address information domain of the second routing device; sending a proxy binding update message to the second routing device according to the address of the second routing device, wherein the proxy binding update message contains an address of the first routing device; after receiving a proxy binding acknowledgement message replied by the second routing device according to the address of the first routing device, storing the address of the second routing device and the IP address information allocated by the second routing device to the first terminal, and finishing the establishing the tunnel with the second routing device.

4. The method of any one of claims 1-3, wherein the maintaining, by the first routing device, the session between the first terminal and the second routing device through the tunnel comprises:
receiving, by the first routing device, a data packet transmitted by the first terminal; and
when detecting that address information of a source IP address of the data packet is allocated by the second routing device according to the address of the second routing device and the IP address information allocated by the second routing device to the first terminal, routing the data packet to the second routing device through the tunnel according to the address of the second routing device.

5. The method of claim 2, wherein the obtaining, by the first routing device, the address of the second routing device in the second network comprises:
receiving, by the first routing device, when receiving the routing interactive message sent by the second routing device, a data packet transmitted by the first terminal; when searching out that source IP address information of the data packet belongs to the IP address information domain of the second routing device, obtaining the address of the second routing device corresponding to the IP address information domain of the second routing device; sending a proxy binding update message to the second routing device according to the address of the second routing device obtained by a third address obtaining subunit, wherein the proxy binding update message contains an address of the first routing device; after receiving a proxy binding acknowledgement message replied by the second routing device according to the address of the first routing device, storing the address of the second routing device and IP address information allocated by the second routing device to the first terminal, and finishing the establishing the tunnel with the second routing device;
the maintaining, by the first routing device, the session between the first terminal and the second routing device through the tunnel comprises:
routing the data packet to the second routing device through the tunnel according to the address of the second routing device.

6. The method of any one of claims 1-5, wherein after the first terminal enters the first network in which the first routing device is located, the method further comprises:
sending, by the first routing device, a router advertisement message to the first terminal, wherein the router advertisement message contains an address of the first routing device and IP address information allocated by the first routing device to the first terminal, so that the first terminal stores a corresponding relationship between the address of the first routing device and the IP address information allocated by the first routing device to the first terminal, and configures an IP address of the first terminal in the first network according to the IP address information;
after receiving a data packet sent by the first terminal, detecting that a source IP address of the data packet is the IP address of the first terminal in the first network; and
routing the data packet to a third terminal corresponding to a target IP address according to the target IP address of the data packet.

7. A device for session routing, wherein the device for session routing serves as a first routing device and comprises:
an obtaining unit, configured to obtain, when a first terminal enters a first network in which the first routing device is located, an address of a second routing device in a second network;
an establishing unit, configured to establish a tunnel with the second routing device according to the address of the second routing device obtained by the obtaining unit; and
a routing unit, configured to maintain a session between the first terminal and the second routing device through the tunnel established by the establishing unit, so that the second routing device routes the session to a second terminal in the second network.

8. The device of claim 7, wherein the obtaining unit comprises at least one of the following:
a first obtaining subunit, configured to receive a router solicitation message sent by the first terminal, wherein the router solicitation message contains the address of the second routing device and IP address information allocated by the second routing device to the first terminal;
a second obtaining subunit, configured to obtain a configuration file stored in the first terminal, wherein the configuration file contains the address of the second routing device and IP address information allocated by the second routing device to the first terminal; and
a third obtaining subunit, configured to receive a routing interactive message sent by the second routing device, wherein the routing interactive message contains the address of the second routing device and an IP address information domain of the second routing device;

9. The device of claim 8, wherein when the first obtaining subunit receives the router solicitation message sent by the first terminal, the establishing unit comprises:
a first address obtaining subunit, configured to obtain the address of the second routing device from the router solicitation message received by the first obtaining subunit; a first message sending subunit, configured to send a proxy binding update message to the second routing device according to the address of the second routing device obtained by the first address obtaining subunit, wherein the proxy binding update message contains an address of the first routing device; a first message receiving subunit, configured to receive a proxy binding acknowledgement message replied by the second routing device according to the address of the first routing device sent by the first message sending subunit; a first information storing subunit, configured to, after the first message receiving subunit receives the proxy binding acknowledgement message, store the address of the second routing device received by the first obtaining subunit and the IP address information allocated by the second routing device to the first terminal, and finish establishing the tunnel with the second routing device;
when the second obtaining subunit obtains the configuration file stored in the first terminal, the establishing unit comprises:
a second address obtaining subunit, configured to obtain the address of the second routing device from the configuration file obtained by the second obtaining subunit; a second message sending subunit, configured to send a proxy binding update message to the second routing device according to the address of the second routing device obtained by the second address obtaining subunit, wherein the proxy binding update message contains an address of the first routing device; a second message receiving subunit, configured to receive a proxy binding acknowledgement message replied by the second routing device according to the address of the first routing device sent by the second message sending subunit; a second information storing subunit, configured to, after the second message receiving subunit receives the proxy binding acknowledgement message, store the address of the second routing device obtained by the second obtaining subunit and the IP address information allocated by the second routing device to the first terminal, and finish establishing the tunnel with the second routing device;
when the third obtaining subunit receives the routing interactive message sent by the second routing device, the establishing unit comprises:
a third routing message receiving subunit, configured to receive a router solicitation message sent by the first terminal, wherein the router solicitation message contains IP address information allocated by the second routing device to the first terminal; a third address obtaining subunit, configured to, when searching out that the IP address information received by the third routing message receiving subunit belongs to the IP address information domain of the second routing device received by the third obtaining subunit, obtain the address of the second routing device corresponding to the IP address information domain of the second routing device; a third message sending subunit, configured to send a proxy binding update message to the second routing device according to the address of the second routing device obtained by the third address obtaining subunit, wherein the proxy binding update message contains an address of the first routing device; a third message receiving subunit, configured to receive a proxy binding acknowledgement message replied by the second routing device according to the address of the first routing device sent by the third message sending subunit; and a third information storing subunit, configured to, after the third message receiving subunit receives the proxy binding acknowledgement message, store the address of the second routing device and the IP address information allocated by the second routing device to the first terminal, and finish establishing the tunnel with the second routing device.

10. The device of any one of claims 7-9, wherein the routing unit comprises:
a first data packet receiving subunit, configured to receive a data packet transmitted by the first terminal;
a first address information detecting subunit, configured to detect whether address information of a source IP address of the data packet received by the data packet receiving subunit is allocated by the second routing device; and
a first data packet routing subunit, configured to, when a detecting result of the first address information detecting subunit is yes, route the data packet received by the first data packet receiving subunit to the second routing device through the tunnel established by the establishing unit, according to the address of the second routing device obtained by the obtaining unit.

11. The device of claim 8, wherein when the third obtaining subunit receives the routing interactive message sent by the second routing device, the establishing unit comprises:
a fourth data packet receiving subunit, configured to receive a data packet transmitted by the first terminal;
a fourth address obtaining subunit, configured to, when the first routing device searches out that the source IP address information of the data packet received by the fourth data packet receiving subunit belongs to the IP address information domain of the second routing device received by the third obtaining subunit, obtain the address of the second routing device corresponding to the IP address information domain of the second routing device;
a fourth message sending subunit, configured to send a proxy binding update message to the second routing device according to the address of the second routing device obtained by the fourth address obtaining subunit, wherein the proxy binding update message contains an address of the first routing device;
a fourth message receiving subunit, configured to receive a proxy binding acknowledgement message replied by the second routing device according to the address of the first routing device sent by the fourth message sending subunit;
a fourth information storing subunit, configured to, after the fourth message receiving subunit receives the proxy binding acknowledgement message, store the address of the second routing device and IP address information allocated by the second routing device to the first terminal, and finish establishing the tunnel with the second routing device;
the routing unit comprises:
a second data packet routing subunit, configured to route the data packet received by the fourth data packet receiving subunit to the second routing device through the tunnel according to the address of the second routing device.

12. The device of any one of claims 7-11, further comprising:
a sending unit, configured to send a router advertisement message to the first terminal, wherein the router advertisement message contains an address of the first routing device and IP address information allocated by the first routing device to the first terminal, so that the first terminal stores a corresponding relationship between the address of the first routing device and the IP address information allocated by the first routing device to the first terminal, and configures an IP address of the first terminal in the first network according to the IP address information;
a detecting unit, configured to, after receiving a data packet sent by the first terminal, detect that a source IP address of the data packet is the IP address of the first terminal in the first network allocated by the first terminal according to the IP address information sent by the sending unit; and
the routing unit is further configured to, when the detecting unit detects that the source IP address of the data packet is the IP address of the first terminal in the first network, route the data packet to a third terminal corresponding to a target IP address according to the target IP address of the data packet.

13. A system for session routing, comprising: a first routing device and a second routing device, wherein the first routing device is configured to, when a first terminal enters a first network in which the first routing device is located, obtain an address of the second routing device in a second network, establish a tunnel with the second routing device according to the address of the second routing device, and maintain a session between the first terminal and the second routing device through the tunnel; and
the second routing device is configured to route the session to a second terminal in the second network.

14. The system of claim 13, wherein the first routing device is further configured to, after the first terminal enters the first network in which the first routing device is located, send a router advertisement message to the first terminal, wherein the router advertisement message contains an address of the first routing device and IP address information allocated by the first routing device to the first terminal, so that the first terminal stores a corresponding relationship between the address of the first routing device and the IP address information allocated by the first routing device to the first terminal, and configures an IP address of the first terminal in the first network according to the IP address information; and after receiving a data packet sent by the first terminal, detect that a source IP address of the data packet is the IP address of the first terminal in the first network, and route the data packet to a third terminal corresponding to a target IP address according to the target IP address of the data packet.
